(19) Europäisches Patentamt
European Patent Office
Office européen des brevets

(11) **EP 2 174 268 B1**

(12) **FASCICULE DE BREVET EUROPEEN**

(45) Date de publication et mention
de la délivrance du brevet:
**29.08.2012 Bulletin 2012/35**

(51) Int Cl.:
**G06K 9/62** (2006.01)

(21) Numéro de dépôt: **08786352.8**

(86) Numéro de dépôt international:
**PCT/EP2008/059660**

(22) Date de dépôt: **23.07.2008**

(87) Numéro de publication internationale:
**WO 2009/016080 (05.02.2009 Gazette 2009/06)**

(54) **PROCEDE, DISPOSITIF ET SYSTEME POUR LA FUSION D'INFORMATIONS PROVENANT DE PLUSIEURS CAPTEURS**

VERFAHREN, VORRICHTUNG UND SYSTEM ZUR ZUSAMMENFASSUNG VON INFORMATIONEN VON VERSCHIEDENEN SENSOREN

METHOD, DEVICE AND SYSTEM FOR MERGING INFORMATION FROM SEVERAL SENSORS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.07.2007 FR 0705528**

(43) Date de publication de la demande:
**14.04.2010 Bulletin 2010/15**

(73) Titulaires:
• **THALES**
**92200 Neuilly-sur-Seine (FR)**
• **Universite De Technologie De Compiegne**
**60205 Compiegne Cedex (FR)**

(72) Inventeurs:
• **PICHON, Frédéric**
**F-75014 Paris (FR)**
• **DENOEUX, Thierry**
**F-60200 Compiegne (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
• **DENOEUX ET AL: "Conjunctive and disjunctive combination of belief functions induced by nondistinct bodies of evidence" ARTIFICIAL INTELLIGENCE, ELSEVIER SCIENCE PUBLISHER B.V., AMSTERDAM, NL, vol. 172, no. 2-3, 5 juin 2007 (2007-06-05), pages 234-264, XP022392585 ISSN: 0004-3702**
• **COBB ET AL: "On the plausibility transformation method for translating belief function models to probability models" INTERNATIONAL JOURNAL OF APPROXIMATE REASONING, ELSEVIER SCIENCE, NEW YORK, NY,, US, vol. 41, no. 3, 30 août 2005 (2005-08-30), pages 314-330, XP005332439 ISSN: 0888-613X**
• **COBB ET AL: "A Comparison of Methods for Transforming Belief Function Models to Probability Models" SYMBOLIC AND QUANTITATIVE APPROACHES TO REASONING WITH UNCERTAINTY LECTURE NOTES IN COMPUTER SCIENCE;LECTURE NOTES IN ARTIFICIAL INTELLIGENCE;LNCS, SPRINGER-VERLAG, BE, vol. 2711, 2004, pages 255-266, XP019001387 ISBN: 3-540-40494-5**
• **P. SMETS: "The canonical decomposition of a weighted belief" PROCEEDINGS OF THE 14TH INTERNATIONAL JOINT CONFERENCE ON ARTIFICIAL INTELLIGENCE, vol. 2, 20 août 1995 (1995-08-20), pages 1896-1901, XP002472848**
• **SMETS P: "The application of the matrix calculus to belief functions" INTERNATIONAL JOURNAL OF APPROXIMATE REASONING, ELSEVIER SCIENCE, NEW YORK, NY,, US, vol. 31, 2002, pages 1-30, XP007902060 ISSN: 0888-613X**

- **FRÉDÉRIC PICHON ET AL: "On Latent Belief Structures" SYMBOLIC AND QUANTITATIVE APPROACHES TO REASONING WITH UNCERTAINTY LECTURE NOTES IN COMPUTER SCIENCE;;, SPRINGER BERLIN HEIDELBERG, BE, vol. 4724, 14 septembre 2007 (2007-09-14), pages 368-380, XP019072377 ISBN: 978-3-540-75255-4**

**Description**

L'invention concerne la fusion d'informations provenant de plusieurs capteurs et plus particulièrement la fusion d'informations imparfaites provenant de sources non indépendantes.

Les systèmes intégrant plusieurs capteurs sont utilisés dans une grande variété de domaines tels que la surveillance de site, la maintenance, la robotique, le diagnostic médical ou les prévisions météorologiques. De tels systèmes par exemple réalisent des fonctions de classification, d'identification et de suivi en temps réel connu sous le terme anglo-saxon « tracking ».

Pour tirer le meilleur parti des systèmes multi-capteurs, il est nécessaire d'utiliser une méthode efficace de fusion d'informations pour combiner les données provenant des différents capteurs du système et générer une décision.

Selon l'art connu, certaines méthodes de fusions d'informations reposent sur la théorie de Dempster-Shafer (théorie généralisant la théorie des probabilités) et utilise ainsi des fonctions de croyance. Les fonctions de croyance sont connues pour leur capacité à représenter fidèlement des informations imparfaites. On appelle information imparfaite une information comportant une imprécision ou une incertitude ou une information incomplète. Les capteurs d'un système sont considérés comme des sources d'informations imparfaites, notamment à cause de leur imprécision. Le terme capteur s'entend ici au sens large. Il inclut les dispositifs physiques pour l'acquisition des données (caméra, radar, ...) mais aussi des dispositifs pour le traitement de ces données. Il est possible d'établir une fonction de croyance à partir des données fournies par la plupart des capteurs disponibles dans le commerce. Des méthodes de combinaison de croyance peuvent être utilisées. De part leur nature ces méthodes sont donc particulièrement appropriées au problème de la fusion d'informations imparfaites issues de capteurs.

Une fonction de croyance peut se représenter à l'aide d'une fonction $m$ appelée distribution de masse définie sur un ensemble des propositions $\Omega$ qui est un espace de mondes possibles de cardinal fini. Elle associe des degrés de croyance, compris entre 0 et 1, à des parties A (groupes de propositions, aussi appelées sous-ensembles) de $\Omega$. Ces degrés de croyance sont déterminés à partir des informations disponibles. L'ensemble des parties de $\Omega$ est noté $2^\Omega$.

Une distribution de masse m satisfait les deux conditions suivantes :

- la masse attribuée à un sous-ensemble A est comprise entre 0 et 1: $0 \leq m(A) \leq 1, \forall\ A \subseteq \Omega$.

- la somme des masses de tous les sous-ensembles est égale à un: $\displaystyle\sum_{A \subseteq \Omega} m(A) = 1$

On peut considérer à titre d'exemple non limitatif, un système multi-capteurs de type classifieur utilisé pour la reconnaissance optique de caractères manuscrits. On suppose que le système est destiné à déterminer si le caractère formé sur une image I est une des lettres 'a', 'b' ou 'c'. On a donc un ensemble de propositions $\Omega =\{a, b, c\}$. Chacun des capteurs du système est un classifieur fournissant lui-même une information sur le caractère à reconnaître sous la forme d'une fonction de croyance. On suppose qu'il y a deux capteurs de ce type dans notre exemple. Le tableau suivant donne un exemple d'une fonction de croyance $m_1$ produite par un premier capteur du système et définie sur $2^\Omega$.

| A | $m_1(A)$ |
|---|---|
| Ø | 0 |
| {a} | 0 |
| {b} | 0 |
| {a, b} | 0.4 |
| {c} | 0 |
| {a, c} | 0 |
| {b.c} | 0.4 |
| $\Omega$ | 0.2 |

Dans cet exemple, le capteur considère qu'il est aussi probable que le caractère à reconnaître appartienne à {a, b} ou qu'il appartienne à {b, c}. ($m_1(\{a, b\}) = m_1(\{b, c\}) = 0.4$). $m_1(\Omega) = 0.2$ représente l'ignorance, c'est-à-dire la part de doute, du capteur.

La théorie de Dempster-Shafer permet de combiner les fonctions de croyances représentant des informations issues de sources différentes, de façon à obtenir une fonction de croyance prenant en compte les influences de chacune des sources. La fonction de croyance ainsi obtenue représente la connaissance combinée des différentes sources d'informations imparfaites (les capteurs).

Cependant, les systèmes reposant sur cette théorie se basent sur l'hypothèse que les informations fusionnées sont indépendantes. Dans la pratique deux informations peuvent être considérées comme indépendantes si les sources associées à ces connaissances ne sont aucunement liées. La notion d'indépendance est capitale car une des contraintes de la fusion d'information est d'éviter de compter deux fois la même information. Il est évident que cette hypothèse d'indépendance n'est pas vérifiée par un certain nombre de systèmes multi-capteurs. Par exemple dans le problème de la reconnaissance optique de caractères manuscrits, les capteurs peuvent ne pas être indépendants. En effet, selon l'art connu, les méthodes de reconnaissances de formes reposent sur des techniques d'apprentissage automatiques utilisant des bases d'apprentissage. Si les capteurs ont été entraînés sur les mêmes bases d'apprentissage, c'est-à-dire si les capteurs ont été réglés en utilisant les mêmes données, alors l'hypothèse d'indépendance requise par les systèmes de fusion de l'art connu n'est pas vérifiée et donc ces systèmes ne peuvent être utilisés.

On connaît déjà par le document Denoeux et. Al., Conjunctive and disjunctive combination of belief functions induced by nondistinct bodies of evidence, Artifical Intelligence, Elsevier Science Publisher B.V. AMSTERDAM, NL, vol. 172, no. 2-3, pages 234-264, un procédé pour fusionner des fonctions de croyance provenant de plusieurs sources d'information. Le document divulgue l'utilisation de fonctions de croyance, le calcul de structures de croyance latente et la fusion de ces structures en une fonction combinée puis la transformation de cette fonction combinée en une fonction de probabilité.

On connaît déjà par le document "On the plausibility transformation method for translating belief functions model to probability models", Cobb and Al., Symbolic and quantitative approaches to reasonning with uncertainty lecture notes in computer science ; lecture notes in Artificial Intelligence ; LCNS, SPRINGER-VERLAG, BE, vol 2711, 2004, pages 255-266, une méthode de calcul d'une distribution de probabilités à partir d'une transformation de plausibilité pour une combinaison de fonctions de masse.

L'invention vise notamment à pallier le problème cité précédemment en proposant un procédé, un dispositif et un système pour la fusion d'informations provenant de plusieurs capteurs non indépendants. Cette invention permet d'éviter que la même information ne soit comptabilisée deux fois lors de la fusion. La solution apportée consiste en la création d'un nouvel opérateur de combinaison s'appliquant à des structures de croyances latentes. Lesdites structures de croyances latentes sont obtenues préalablement de fonctions de croyance classiques. Ces fonctions de croyances classiques sont produites directement à partir, par exemple, des capteurs du système. L'invention propose aussi un moyen de transformer ces structures de croyances latentes en une distribution de probabilités utile à une prise de décision.

A cet effet, l'invention a pour objet un procédé pour la fusion d'informations provenant de plusieurs capteurs $c_1$, $c_2$, ..., $c_n$, n étant le nombre de capteurs, ledit procédé comprenant les étapes suivantes :

- l'acquisition de fonctions de croyance $m_1$, $m_2$, ..., $m_n$ issues des capteurs $c_1$, $c_2$, ..., $c_n$, lesdites fonctions de croyance $m_1$, $m_2$, ..., $m_n$ étant définies sur un ensemble de propositions $\Omega$,
- le calcul de structures de croyance latente $SCL_1$, $SCL_2$, ..., $SCL_n$ pour chaque fonction de croyance $m_1$, $m_2$, ..., $m_n$, lesdites structures de croyance latente $SCL_1$, $SCL_2$, ..., $SCL_n$ comprenant chacune un couple de fonctions ($w_1^c$, $w_1^d$), ($w_2^c$, $w_2^d$), ..., ($w_n^c$, $w_n^d$),

caractérisé en ce que lesdits capteurs $c_1$, $c_2$, ..., $c_n$ sont non indépendants et en ce qu'il comporte en outre les étapes suivantes :

- le calcul d'une structure de croyance latente fusionnée $SCL_f$ ladite structure de croyance latente fusionnée $SCL_f$ comprenant un couple de fonctions $w_f^c$ et $w_f^d$ calculées par l'application d'une fonction dite règle faible sur les fonctions ($w_1^c$, $w_1^d$), ($w_2^c$, $w_2^d$), ..., ($w_n^c$, $w_n^d$) :

$$w_f^c(A) = w_1^c(A) \wedge w_2^c(A) \wedge ... \wedge w_n^c(A), \quad A \subset \Omega$$

$$w_f^d(A) = w_1^d(A) \wedge w_2^d(A) \wedge ... \wedge w_n^d(A), \quad A \subset \Omega$$

$w_f^c$ et $w_f^d$ étant définies sur tous les sous-ensembles A de $\Omega$,
- le calcul d'une distribution de probabilités $P_f$ à partir des fonctions $w_f^c$ et $w_f^d$.

Selon une variante de l'invention, l'acquisition des fonctions de croyance est directe, lesdits capteurs $c_1$, $c_2$, ..., $c_n$ donnant directement une fonction de croyance.

**EP 2 174 268 B1**

Selon une autre variante de l'invention, caractérisé en ce que l'acquisition des fonctions de croyance est indirecte, lesdites fonctions de croyance $m_1$, $m_2$, ..., $m_n$ étant calculées à partir des informations issues des capteurs $c_1$, $c_2$, ..., $c_n$.

Selon une caractéristique de l'invention, le calcul d'une distribution de probabilités comprend les étapes suivantes :

- le calcul de fonctions de communalités $q_f^c$ et $q_f^d$ à partir des fonctions $w_f^c$ et $w_f^d$,
- le calcul de fonctions $pl_f^c$ et $pl_f^d$ à partir des fonctions de communalités $q_f^c$ et $q_f^d$,
- le calcul de distributions de probabilités $P_f^c$ et $P_f^d$ à partir des fonctions $pl_f^c$ et $pl_f^d$,
- le calcul d'une distribution de probabilités fusionnée $P_f$ correspondant à la structure de croyance latente fusionnée et calculée à partir des distributions de probabilités $P_f^c$ et $P_f^d$.

Selon une caractéristique de l'invention, le calcul des fonctions de communalités $q_f^c$ et $q_f^d$ utilise les équations suivantes:

$$q_f^c(B) = \prod_{B \not\subset A \subset \Omega} w_f^c(A)$$

$$q_f^d(B) = \prod_{B \not\subset A \subset \Omega} w_f^d(A)$$

Selon une caractéristique de l'invention, le calcul des fonctions $pl_f^c$ et $pl_f^d$ utilise les équations suivantes :

$$pl_f^c(A) = \sum_{\varnothing \neq B \subseteq A} (-1)^{|B|+1} q_f^c(B), \quad A \in 2^\Omega, pl_f^c(\varnothing) = 0$$

$$pl_f^d(A) = \sum_{\varnothing \neq B \subseteq A} (-1)^{|B|+1} q_f^d(B), \quad A \in 2^\Omega, pl_f^d(\varnothing) = 0$$

Selon une caractéristique de l'invention, le calcul des distributions de probabilités $P_f^c$ et $P_f^d$ utilise les équations suivantes :

$$P_f^c(\{\omega_k\}) = \kappa^{-1} pl_f^c(\{\omega_k\}), \forall \omega_k \in \Omega \text{ avec } \kappa = \sum_{\omega_k \in \Omega} pl_f^c(\{\omega_k\})$$

$$P_f^d(\{\omega_k\}) = \kappa^{-1} pl_f^d(\{\omega_k\}), \forall \omega_k \in \Omega \text{ avec } \kappa = \sum_{\omega_k \in \Omega} pl_f^d(\{\omega_k\})$$

Selon une caractéristique de l'invention, le calcul de la distribution de probabilités fusionnée $P_f$ utilise l'équation suivante :

$$P_f(\{\omega_k\}) = \kappa^{-1} P_f^c(\{\omega_k\}) / P_f^d(\{\omega_k\}) \text{ avec } \kappa = \sum_{\omega_k \in \Omega} P_f^c(\{\omega_k\}) / P_f^d(\{\omega_k\})$$

L'invention a aussi pour objet un dispositif pour la fusion d'informations comprenant :

- des moyens pour l'acquisition de fonctions de croyance $m_1$, $m_2$, ..., $m_n$ à partir des informations issues de capteurs,
- des moyens de fusion des fonctions de croyances provenant des moyens pour l'acquisition,

caractérisé en ce que les moyens de fusions d'informations mettent en oeuvre le procédé selon l'invention.

L'invention a aussi pour objet un système pour la fusion d'informations comprenant :

5

- au moins deux capteurs, collectant des données et fournissant des informations,
- des moyens de fusion d'informations provenant desdits capteurs, lesdits moyens de fusion étant reliés aux capteurs,

caractérisé en ce que lesdits capteurs sont non indépendants et en ce que les moyens de fusions d'informations comprennent le dispositif pour la fusion d'informations selon l'invention.

L'invention sera mieux comprise et d'autres avantages apparaîtront à la lecture de la description détaillée faite à titre d'exemple non limitatif et à l'aide des figures parmi lesquelles :

La figure 1 représente un exemple de réalisation d'un système de fusion d'informations selon l'invention.

La figure 2 représente un diagramme des étapes mise en oeuvre dans le procédé de fusion d'informations selon l'invention.

On se propose d'illustrer le procédé selon l'invention, à titre d'exemple non limitatif, avec le système multi-capteurs de type classifieur utilisé pour la reconnaissance optique de caractères manuscrits évoqué précédemment. On suppose que le système est destiné à déterminer si le caractère formé sur une image I est une des lettres 'a', 'b' ou 'c'.

Le terme capteur s'entend ici au sens large. Il inclut les dispositifs physiques pour l'acquisition des données (caméra, micro, ...) mais aussi des dispositifs pour le traitement de ces données, dans l'exemple : un classifieur.

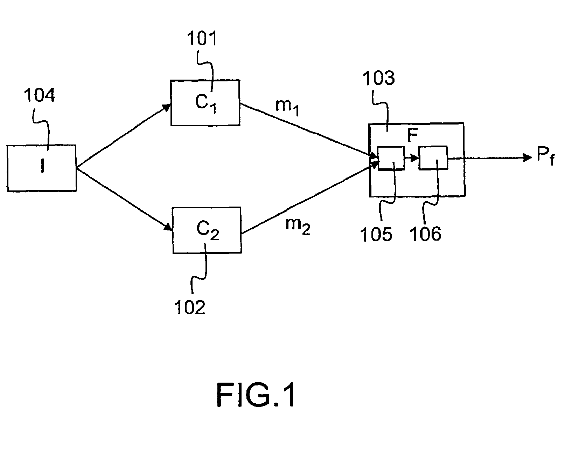

Un exemple de réalisation d'un système de fusion d'informations selon l'invention est illustré par la figure 1. Un tel système comprend un premier système de classification $C_1$ 101 et un second système de classification $C_2$ 102. On suppose que chacun des deux systèmes de classification comporte un dispositif permettant l'acquisition de l'image I 104 tel qu'une caméra vidéo par exemple, et des moyens de traitement du signal comprenant la reconnaissance de caractère à partir de l'image I capturée et la création d'une fonction de croyance m(A) indiquant le degré de croyance du capteur dans les alternatives ({a}, {b} et {c}) et dans les ensembles d'alternatives ({a,b}, {a,c}, et {b,c}).

Selon l'art connu, les méthodes de reconnaissance de formes reposent sur des techniques d'apprentissage automatique utilisant des bases d'apprentissage prédéterminées. Dans cet exemple, nous supposons que les deux systèmes de classification $C_1$ 101 et $C_2$ 102 ne sont pas indépendants car ils ont été entraînés sur la même base d'apprentissage. L'hypothèse d'indépendance supposée dans les systèmes de fusion selon l'art connu n'est donc pas vérifiée.

Le système comporte en outre un dispositif 103 pour la fusion des informations provenant des capteurs $C_1$ et $C_2$. Le dispositif 103 pour la fusion des informations comporte :

- des moyens pour l'acquisition 105 de fonctions de croyance $m_1$, $m_2$, ..., $m_n$ issues des capteurs 101, 102,
- des moyens de fusion 106 des fonctions de croyance $m_1$, $m_2$, ..., $m_n$ provenant desdits capteurs 101, 102.

L'acquisition peut être faite de façon directe lorsqu'un capteur produit directement une fonction de croyance ou de façon indirecte lorsque la fonction de croyance est calculée à partir des informations fournies par le capteur.

Ces moyens 106 sont remarquables en ce qu'ils mettent en oeuvre le procédé selon l'invention et en ce qu'ils permettent de calculer une distribution de probabilités à partir des fonctions de croyance fournies par les deux capteurs $C_1$ et $C_2$ non indépendants. Les moyens de fusion 106 peuvent être un calculateur ou un circuit intégré mettant en oeuvre le procédé selon l'invention.

Le système doit reconnaître dans l'image acquise l'une des trois lettres 'a', 'b' ou 'c'. On a donc un ensemble de propositions $\Omega$ ={a, b, c }

Le tableau ci-après présente les différents calculs intermédiaires effectués en appliquant le procédé selon l'invention.

La première colonne contient les sous-ensembles de $\Omega$. Les deuxième et troisième colonnes contiennent les valeurs des fonctions $m_1(A)$, $m_2(A)$ fournies par les deux capteurs.

| A | $m_1(A)$ | $m_2(A)$ | $w^c_1(A)$ | $w^d_1(A)$ | $w^c_2(A)$ | $w^d_2(A)$ | $w^c_f$ | $w^d_f$ | $P_f$ |
|---|---|---|---|---|---|---|---|---|---|
| Ø | 0 | 0 | 1 | 1 | 1 | 1 | 1 | 1 | |
| {a} | 0 | 0 | 1 | 1 | 1 | 1 | 1 | 1 | 9/19 |
| {b} | 0 | 0 | 1 | 5/9 | 1 | 1 | 1 | 5/9 | 5/19 |
| (a, b} | 0.4 | 0 | 1/3 | 1 | 1 | 1 | 1/3 | 1 | |
| {c} | 0 | 0 | 1 | 1 | 1 | 5/9 | 1 | 5/9 | 5/19 |
| {a, c} | 0 | 0.4 | 1 | 1 | 1/3 | 1 | 1/3 | 1 | |
| {b, c} | 0.4 | 0.4 | 1/3 | 1 | 1/3 | 1 | 1/3 | 1 | |
| $\Omega$ | 0.2 | 0.2 | | | | | | | |

Le procédé pour la fusion d'informations provenant de plusieurs capteurs selon l'invention est appliqué ci-après au système comprenant deux capteurs, lesdits capteurs étant non indépendants. Cependant le procédé selon l'invention peut s'appliquer à un système comportant un nombre supérieur de capteurs.

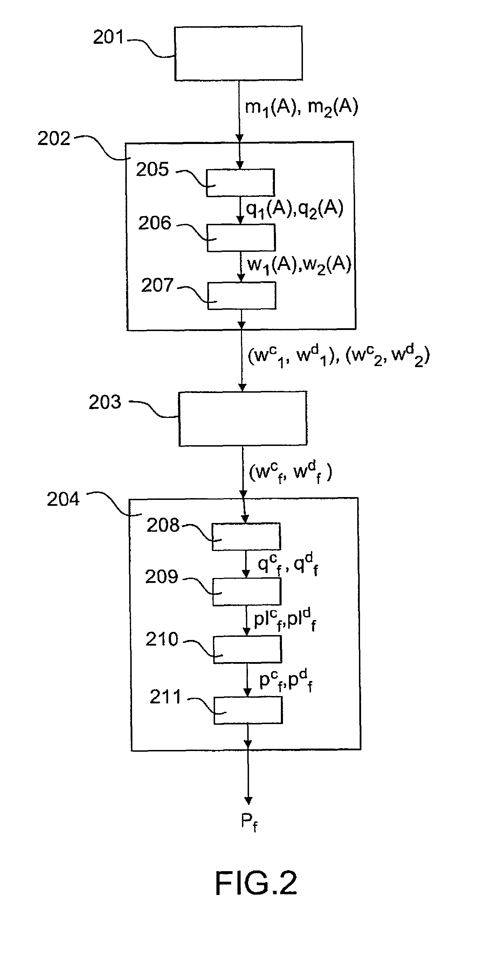

La figure 2 représente un diagramme des étapes mise en oeuvre dans le procédé de fusion d'informations selon l'invention.

La première étape 201 du procédé selon l'invention est l'acquisition des fonctions de croyance $m_1$, $m_2$ issues des capteurs. Dans l'exemple, on acquiert deux fonctions $m_1$, $m_2$ correspondant respectivement aux deux capteurs $C_1$ et $C_2$. Dans cet exemple, le premier capteur $C_1$ considère qu'il est aussi probable que le caractère à reconnaître appartienne à {a, b} ou qu'il appartienne à {b, c}. ($m_1$({a, b}) = $m_1$({b, c}) = 0.4). $m_1(\Omega)$ = 0.2 représente l'ignorance, c'est-à-dire la part de doute du capteur. Le second capteur $C_2$ considère qu'il est aussi probable que le caractère à reconnaître appartienne à {a, c} ou qu'il appartienne à {b, c}.

La deuxième étape 202 du procédé selon l'invention est le calcul de structures de croyance latente $SCL_1$ et $SCL_2$ pour chaque fonction de croyance $m_1$, $m_2$ obtenue à partir de chacun des capteurs. Chacune des structures de croyance latente $SCL_1$ et $SCL_2$ est calculée en utilisant la décomposition canonique d'une fonction de croyance. La décomposition canonique est une fonction notée w et calculée à partir de la fonction de croyance m par le biais d'une fonction q appelée fonction de communalité. On calcule donc 206 la décomposition canonique $w_1$ de la fonction de croyance $m_1$ à partir de la fonction $q_1$. La fonction $q_1$ est calculée 205 avec l'équation suivante :

$$q_1(A) = \sum_{B \supseteq A} m_1(B), \quad A \in 2^\Omega$$

On a, par exemple, $q_1$({a,b}) = $m_1$({a,b}) + $m_1(\Omega)$ = 0,4 + 0,2 = 0,6 ; $q_1(\Omega)$ = $m_1(\Omega)$ = 0,2.

La fonction est $w_1$ calculée 206 avec l'équation suivante :

$$w_1(A) = \prod_{B \supseteq A} q_1(B)^{(-1)^{(|B|-|A|+1)}}, \quad A \in 2^\Omega \backslash \{\Omega\}$$

où l'opérateur |A| représente le cardinal de l'ensemble A. On a par exemple :

$$w_1(\{a,b\}) = q_1(\{a,b\})^{(-1)^{(|\{a,b\}|-|\{a,b\}|+1)}} \times q_1(\Omega)^{(-1)^{(|\Omega|-|\{a,b\}|+1)}}$$
$$= 0,6^{(-1)^{(2-2+1)}} \times 0,2^{(-1)^{(3-2+1)}} = \frac{0,2}{0,6} = \frac{1}{3}$$

De façon similaire, on calcule la décomposition canonique $w_2$ de la fonction de croyance $m_2$.

Une structure de croyance latente $SCL_1$ est un couple de fonctions $w_1^c$ et $w_1^d$ représentant respectivement la confiance et la défiance pour un ensemble A donné. Le calcul 207 des fonctions $w_1^c$ et $w_1^d$ dont les valeurs figurent dans les quatrième et cinquième colonnes du tableau ci-avant, utilise les équations suivantes :

$$w_1^c(A) = 1 \wedge w_1(A), \quad A \in 2^\Omega \backslash \{\Omega\}$$

$$w_1^d(A) = 1 \wedge \frac{1}{w_1(A)}, \quad A \in 2^\Omega \backslash \{\Omega\}$$

où l'opérateur $\wedge$ est le minimum entre deux valeurs.

On a, par exemple, $w_1^c$ ({a, b}) = 1 $\wedge$ $w_1$ ({a, b}) = 1 $\wedge$ ⅓ = ⅓ et

$$w_1^d(\{a,b\}) = 1 \wedge \frac{1}{w_1(\{a,b\})} = 1 \wedge \frac{1}{\frac{1}{3}} = 1$$

On procède de façon similaire pour calculer les fonctions $w_2^c$ et $w_2^d$ dont les valeurs figurent dans les sixième et septième colonnes du tableau ci-avant.

Le procédé selon l'invention est remarquable en ce qu'il comporte en outre les étapes suivantes.

La troisième étape 203 du procédé selon l'invention est le calcul d'une structure de croyance latente fusionnée $SCL_f$ par l'application d'une règle appelée règle faible sur les valeurs calculées à l'étape précédente 202. La structure de croyance latente fusionnée $SCL_f$ prend la forme d'un couple de fonctions $w_f^c(A)$ et $w_f^d(A)$. La règle faible est définie par :

$$w_f^c(A) = w_1^c(A) \wedge w_2^c(A), \quad A \in 2^\Omega \setminus \{\Omega\}$$

$$w_f^d(A) = w_1^d(A) \wedge w_2^d(A), \quad A \in 2^\Omega \setminus \{\Omega\}$$

La quatrième étape 204 du procédé selon l'invention est le calcul d'une distribution de probabilités $P_f$ à partir de la structure de croyance latente fusionnée $SCL_f$.

Selon l'art connu, on peut obtenir une distribution de probabilités à partir d'une distribution de masse. La SCL obtenue à l'étape précédente 203 peut être convertie en distribution de masse, toutefois cette distribution de masse est potentiellement signée, c'est-à-dire qu'elle peut prendre ses valeurs dans l'ensemble des réels IR plutôt que dans l'intervalle [0,1]. Or la méthode selon l'art connu pour obtenir une distribution de probabilité à partir d'une distribution de masse n'est pas applicable aux distributions de masse signées. Le procédé selon l'invention est remarquable en ce qu'il permet de calculer une distribution de probabilités directement à partir de la SCL fusionnée, c'est-à-dire sans besoin de calculer une distribution de masse intermédiaire.

Le calcul 204 d'une distribution de probabilités $P_f$ à partir de la structure de croyance latente fusionnée comprend les sous-étapes suivantes.

La première sous-étape 208 est le calcul des fonctions de communalités correspondant aux fonctions $w_f^c$ et $w_f^d$ calculées précédemment et répondant aux équations suivantes :

$$q_f^c(B) = \prod_{B \not\subset A \subset \Omega} w_f^c(A)$$

$$q_f^d(B) = \prod_{B \not\subset A \subset \Omega} w_f^d(A)$$

On a par exemple :

$$q_f^c(\{a,b\}) = w_f^c(\varnothing)w_f^c(\{a\})w_f^c(\{b\})w_f^c(\{c\})w_f^c(\{a,c\})w_f^c(\{b,c\})$$

$$= 1*1*1*1*\frac{1}{3}*\frac{1}{3} = \frac{1}{9}$$

et

$$q_f^d(\{a,b\}) = w_f^d(\varnothing)w_f^d(\{a\})w_f^d(\{b\})w_f^d(\{c\})w_f^d(\{a,c\})w_f^d(\{b,c\})$$

$$= 1*1*\frac{5}{9}*\frac{5}{9}*1*1 = \frac{25}{81}$$

La deuxième sous-étape 209 est le calcul des fonctions de plausibilité $pl_f^c$ et $pl_f^d$ à partir des fonctions de communalités $q_f^c$ et $q_f^d$ calculées précédemment et répondant aux équations suivantes :

$$pl_f^c(A) = \sum_{\varnothing \neq B \subseteq A} (-1)^{|B|+1} q_f^c(B), \quad A \in 2^\Omega, pl_f^c(\varnothing) = 0$$

$$pl_f^d(A) = \sum_{\varnothing \neq B \subseteq A} (-1)^{|B|+1} q_f^d(B), \quad A \in 2^\Omega, pl_f^d(\varnothing) = 0$$

On a par exemple:

$$pl_f^c(\{a\}) = q_f^c(\{a\}) = \frac{1}{3}$$

On procède de façon similaire pour calculer la fonction $pl_f^d$.

La troisième sous-étape 210 est le calcul des distributions de probabilités $P_f^c$ et $P_f^d$ à partir des fonctions de plausibilité $pl_f^c$ et $pl_f^d$ calculées précédemment. Cela se fait par les équations suivantes :

$$P_f^c(\{\omega_k\}) = \kappa^{-1} pl_f^c(\{\omega_k\}), \forall \omega_k \in \Omega \text{ avec } \kappa = \sum_{\omega_k \in \Omega} pl_f^c(\{\omega_k\})$$

On a par exemple :

$$P_f^c(\{a\}) = \frac{pl_f^c(\{a\})}{pl_f^c(\{a\}) + pl_f^c(\{b\}) + pl_f^c(\{c\})} = \frac{\dfrac{1}{3}}{\dfrac{1}{3} + \dfrac{1}{3} + \dfrac{1}{3}} = \frac{1}{3}$$

On procède de façon similaire pour calculer la fonction $P_f^d$.

La quatrième sous-étape 211 est le calcul d'une distribution de probabilités $P_f$ correspondant à la structure de croyance latente fusionnée $SCL_f$ et calculée à partir des distributions de probabilités $P_f^c$ et $P_f^d$:

$$P_f(\{\omega_k\}) = \kappa^{-1} P_f^c(\{\omega_k\}) / P_f^d(\{\omega_k\}) \text{ avec } \kappa = \sum_{\omega_k \in \Omega} P_f^c(\{\omega_k\}) / P_f^d(\{\omega_k\})$$

On a donc:

$$P_f(\{a\}) = \frac{P_f^c(\{a\}) / P_f^d(\{a\})}{P_f^c(\{a\}) / P_f^d(\{a\}) + P_f^c(\{b\}) / P_f^d(\{b\}) + P_f^c(\{c\}) / P_f^d(\{c\})}$$

$$= \frac{\left(\dfrac{1}{3}\right) / \left(\dfrac{5}{23}\right)}{\left(\dfrac{1}{3}\right) / \left(\dfrac{5}{23}\right) + \left(\dfrac{1}{3}\right) / \left(\dfrac{9}{23}\right) + \left(\dfrac{1}{3}\right) / \left(\dfrac{9}{23}\right)} = \frac{\dfrac{23}{15}}{\dfrac{437}{135}} = \frac{9}{19}$$

De même, on calcule $P_f(\{b\})$ et $P_f(\{c\})$ :

$$P_f(\{b\}) = P_f(\{c\}) = \frac{5}{19}$$

La distribution de probabilités $P_f$ correspondant à l'exemple est donnée dans la dixième colonne du tableau ci-avant. La conclusion du système multi-capteur selon l'invention est que le caractère le plus probable sur l'image I est 'a'.

**Revendications**

1. Procédé , implémenté par un dispositif, de fusion d'informations provenant de plusieurs capteurs $c_1$, $c_2$, ..., $c_n$, $n$ étant le nombre de capteurs, ledit procédé comprenant les étapes suivantes :

   - l'acquisition (201) de fonctions de croyance $m_1$, $m_2$, ..., $m_n$ issues des capteurs $c_1$, $c_2$, ..., $c_n$, lesdites fonctions de croyance $m_1$, $m_2$, ..., $m_n$ étant définies sur un ensemble de propositions $\Omega$,
   - le calcul (202) de structures de croyance latente $SCL_1$, $SCL_2$, ..., $SCL_n$ pour chaque fonction de croyance $m_1$, $m_2$, ..., $m_n$, lesdites structures de croyance latente $SCL_1$, $SCL_2$, ..., $SCL_n$ comprenant chacune un couple de fonctions $(w_1{}^c, w_1{}^d)$, $(w_2{}^c, w_2{}^d)$, ..., $(w_n{}^c, w_n{}^d)$, représantant respectivement les composantes de confiance et de défiance,

   **caractérisé en ce que** lesdits capteurs $c_1$, $c_2$, ..., $c_n$ sont non indépendants et **en ce qu'**il comporte en outre les étapes suivantes :

   - le calcul (203) d'une structure de croyance latente fusionnée $SCL_f$ ladite structure de croyance latente fusionnée $SCL_f$ comprenant un couple de fonctions $w_f{}^c$ et $w_f{}^d$ calculées par l'application d'une fonction dite règle faible sur les fonctions $(w_1{}^c, w_1{}^d)$, $(w_2{}^c, w_2{}^d)$, ..., $(w_n{}^c, w_n{}^d)$:

   $$w_f^c(A) = w_1^c(A) \wedge w_2^c(A) \wedge ... \wedge w_n^c(A), \quad A \subset \Omega$$

   $$w_f^d(A) = w_1^d(A) \wedge w_2^d(A) \wedge ... \wedge w_n^d(A), \quad A \subset \Omega$$

   $w_f{}^c$ et $w_f{}^d$ étant définies sur tous les sous-ensembles A de $\Omega$, et où l'opérateur $\wedge$ est le minimum entre deux valeurs,
   - le calcul (204) d'une distribution de probabilités $P_f$ à partir des fonctions $w_f{}^c$ et $w_f{}^d$,

   le calcul (204) d'une distribution de probabilités comprenant les étapes suivantes :

   - le calcul (208) de fonctions de communalités $q_f{}^c$ et $q_f{}^d$ à partir des fonctions $w_f{}^c$ et $w_f{}^d$,
   - le calcul (209) de fonctions de plausibilité $pl_f{}^c$ et $pl_f{}^d$ à partir des fonctions de communalités $q_f{}^c$ et $q_f{}^d$, en utilisant les équations suivantes :

   $$pl_f^c(A) = \sum_{\varnothing \neq B \subseteq A} (-1)^{|B|+1} q_f^c(B), \quad A \in 2^\Omega, pl_f^c(\varnothing) = 0$$

   $$pl_f^d(A) = \sum_{\varnothing \neq B \subseteq A} (-1)^{|B|+1} q_f^d(B), \quad A \in 2^\Omega, pl_f^d(\varnothing) = 0$$

   - le calcul (210) de distributions de probabilités $P_f{}^c$ et $P_f{}^d$ à partir des fonctions de plausibilité $pl_f{}^c$ et $pl_f{}^d$, en utilisant les équations suivantes :

   $$P_f^c(\{\omega_k\}) = \kappa^{-1} pl_f^c(\{\omega_k\}), \forall \omega_k \in \Omega \text{ avec } \kappa = \sum_{\omega_k \in \Omega} pl_f^c(\{\omega_k\})$$

   $$P_f^d(\{\omega_k\}) = \kappa^{-1} pl_f^d(\{\omega_k\}), \forall \omega_k \in \Omega \text{ avec } \kappa = \sum_{\omega_k \in \Omega} pl_f^d(\{\omega_k\})$$

   - le calcul (211) d'une distribution de probabilités fusionnée $P_f$ correspondant à la structure de croyance latente fusionnée et calculée à partir des distributions de probabilités $P_f{}^c$ et $P_f{}^d$ en utilisant l'équation suivante :

$$P_f(\{\omega_k\}) = \kappa^{-1} P_f^c(\{\omega_k\}) / P_f^d(\{\omega_k\}) \text{ avec } \kappa = \sum_{\omega_k \in \Omega} P_f^c(\{\omega_k\}) / P_f^d(\{\omega_k\}).$$

**2.** Procédé selon la revendication 1, **caractérisé en ce que** le calcul (208) des fonctions de communalités $q_f^c$ et $q_f^d$ utilise les équations suivantes:

$$q_f^c(B) = \prod_{B \alpha A \subset \Omega} w_f^c(A)$$

$$q_f^d(B) = \prod_{B \alpha A \subset \Omega} w_f^d(A)$$

**3.** Procédé selon l'une des revendications 1 ou 2, **caractérisé en ce que** l'acquisition (201) des fonctions de croyance est directe, lesdits capteurs $c_1$, $c_2$, ..., $c_n$ donnant directement une fonction de croyance.

**4.** Procédé selon l'une des revendications 1 ou 2, **caractérisé en ce que** l'acquisition (201) des fonctions de croyance est indirecte, lesdites fonctions de croyance $m_1$, $m_2$, ..., $m_n$ étant calculées à partir des informations issues des capteurs $c_1$, $c_2$, ..., $c_n$.

**5.** Dispositif pour la fusion d'informations (103) comprenant :

- des moyens pour l'acquisition (105) de fonctions de croyance $m_1$, $m_2$, ..., $m_n$ à partir des informations issues de capteurs (101, 102),
- des moyens de fusion (106) des fonctions de croyances provenant des moyens pour l'acquisition (105),

**caractérisé en ce que** les moyens de fusions d'informations (103) mettent en oeuvre le procédé selon l'une des revendications 1 à 4.

**6.** Système pour la fusion d'informations comprenant :

- au moins deux capteurs (101, 102), collectant des données et fournissant des informations,
- des moyens de fusion d'informations (103) provenant desdits capteurs (101, 102), lesdits moyens de fusion étant reliés aux capteurs,

**caractérisé en ce que** lesdits capteurs sont non indépendants et **en ce que** les moyens de fusions d'informations (103) comprennent le dispositif pour la fusion d'informations selon la revendication 5.

**Claims**

**1.** A method, implemented by a device, for merging information that originates from a plurality of sensors $c_1$, $c_2$, ..., $c_n$, n being the number of sensors, said method comprising the following steps:

- acquiring (201) belief functions $m_1$, $m_2$, ..., $m_n$ coming from the sensors $c_1$, $c_2$, ..., $c_n$, said belief functions $m_1$, $m_2$, ..., $m_n$ being defined on a set of proposals $\Omega$,
- calculating (202) latent belief structures $SCL_1$, $SCL_2$, ..., $SCL_n$ for each belief function $m_1$, $m_2$, ..., $m_n$, each of said latent belief structures $SCL_1$, $SCL_2$, ..., $SCL_n$ comprising a pair of functions $(w_1^c, w_1^d)$, $(w_2^c, w_2^d)$, ..., $(w_n^c, w_n^d)$ respectively representing the trust and distrust components,
**characterised in that** said sensors $c_1$, $c_2$, ..., $c_n$ are not independent and **in that** it further comprises the following steps:
- calculating (203) a merged latent belief structure $SCL_f$, said merged latent belief structure $SCL_f$ comprising a pair of functions $w_f^c$ and $w_f^d$ that are calculated by the application of a function, referred to as a weak rule, to the functions $(w_1^c, w_1^d)$, $(w_2^c, w_2^d)$, ..., $(w_n^c, w_n^d)$:

$$w_f^c(A) = w_1^c(A) \wedge w_2^c(A) \wedge ... \wedge w_n^c(A), \quad A \subset \Omega$$

$$w_f^d(A) = w_1^d(A) \wedge w_2^d(A) \wedge ... \wedge w_n^d(A), \quad A \subset \Omega$$

$w_f^c$ and $w_f^d$ being defined on all of the sub-sets A of $\Omega$, and where the operator A is the minimum between two values,

- calculating (204) a distribution of probabilities $P_f$ from the functions $w_f^c$ and $w_f^d$,

the calculation (204) of a distribution of probabilities comprising the following steps:

- calculating (208) commonality functions $q_f^c$ and $q_f^d$ from the functions $w_f^c$ and $w_f^d$,
- calculating (209) plausibility functions $pl_f^c$ and $pl_f^d$ from the commonality functions $q_f^c$ and $q_f^d$, using the following equations:

$$pl_f^c(A) = \sum_{\varnothing \neq B \subseteq A} (-1)^{|B|+1} q_f^c(B), \quad A \in 2^\Omega, \, pl_f^c(\varnothing) = 0$$

$$pl_f^d(A) = \sum_{\varnothing \neq B \subseteq A} (-1)^{|B|+1} q_f^d(B), \quad A \in 2^\Omega, \, pl_f^d(\varnothing) = 0$$

- calculating (210) distributions of probabilities $P_f^c$ and $P_f^d$ from the plausibility functions $pl_f^c$ and $pl_f^d$, using the following equations:

$$P_f^c(\{\omega_k\}) = \kappa^{-1} pl_f^c(\{\omega_k\}), \, \forall \omega_k \in \Omega \text{ with } \kappa = \sum_{\omega_k \in \Omega} pl_f^c(\{\omega_k\})$$

$$P_f^d(\{\omega_k\}) = \kappa^{-1} pl_f^d(\{\omega_k\}), \, \forall \omega_k \in \Omega \text{ with } \kappa = \sum_{\omega_k \in \Omega} pl_f^d(\{\omega_k\})$$

- calculating (211) a merged probabilities distribution $P_f$ that corresponds to the merged latent belief structure and is calculated from distributions of probabilities $P_f^c$ and $P_f^d$, using the following equation:

$$P_f(\{\omega_k\}) = \kappa^{-1} P_f^c(\{\omega_k\}) / P_f^d(\{\omega_k\}) \text{ with } \kappa = \sum_{\omega_k \in \Omega} P_f^c(\{\omega_k\}) / P_f^d(\{\omega_k\}).$$

2. The method according to claim 1, **characterised in that** the following equations are used in the calculation (208) of the commonality functions $q_f^c$ and $q_f^d$:

$$q_f^c(B) = \prod_{B \subset A \subset \Omega} w_f^c(A)$$

$$q_f^d(B) = \prod_{B \subset A \subset \Omega} w_f^d(A)$$

3. The method according to any one of claims 1 to 2, **characterised in that** the acquisition (201) of the belief functions is direct, said sensors $c_1, c_2, ..., c_n$ directly providing a belief function.

4. The method according to any one of claims 1 to 2, **characterised in that** the acquisition (201) of the belief functions is indirect, said belief functions $m_1, m_2, ..., m_n$ being calculated from information coming from the sensors $c_1, c_2, ..., c_n$.

5. A device for merging information (103) comprising:

- means for acquiring (105) belief functions $m_1$, $m_2$, ..., $m_n$ from information coming from sensors (101, 102),
- means for merging (106) the belief functions that originate from the acquisition means (105),
**characterised in that** the means for merging information (103) implement the method according to any one of claims 1 to 4.

6. A system for merging information comprising:

- at least two sensors (101, 102) gathering data and providing information,
- means for merging information (103) that originates from said sensors (101, 102), said merging means being linked to the sensors,
**characterised in that** said sensors are not independent and **in that** the means for merging information (103) comprise the device for merging information according to claim 5.

**Patentansprüche**

1. Verfahren, ausgeführt durch eine Vorrichtung, zum Zusammenfügen von Informationen von mehreren Sensoren $c_1$, $c_2$, ..., $c_n$, wobei n die Zahl der Sensoren ist, wobei das Verfahren die folgenden Schritte beinhaltet:

- Erfassen (201) von Glaubensfunktionen $m_1$, $m_2$, ..., $m_n$ von den Sensoren $c_1$, $c_2$, ..., $c_n$, wobei die Glaubensfunktionen $m_1$, $m_2$, ..., $m_n$ auf einem Satz von Vorschlägen $\Omega$ definiert sind,
- Berechnen (202) von latenten Glaubensstrukturen $SCL_1$, $SCL_2$, ..., $SCL_n$ für jede Glaubensfunktion $m_1$, $m_2$, ..., $m_n$, wobei die latenten Glaubensstrukturen $SCL_1$, $SCL_2$, ..., $SCL_n$ jeweils ein Funktionspaar $(w_1^c, w_1^d)$, $(w_2^c, w_2^d)$, ..., $(w_n^c, w_n^d)$ umfassen, die jeweils die Vertrauens- und Misstrauenskomponenten repräsentieren;
**dadurch gekennzeichnet, dass** die Sensoren $c_1$, $c_2$, ..., $c_n$ nicht unabhängig sind, und dadurch, dass es darüber hinaus die folgenden Schritte beinhaltet:
- Berechnen (203) einer zusammengefügten latenten Glaubensstruktur $SCL_f$, wobei die zusammengefügte latente Glaubensstruktur $SCL_f$ ein Funktionspaar $w_f^c$ und $w_f^d$ umfasst, berechnet durch Anwenden einer Funktion, schwache Regel genannt, auf die Funktionen $(w_1^c, w_1^d)$, $(w_2^c, w_2^d)$, ..., $(w_n^c, w_n^d)$:

$$w_f^c(A) = w_1^c(A) \wedge w_2^c(A) \wedge ... \wedge w_n^c(A), A \subset \Omega$$

$$w_f^d(A) = w_1^d(A) \wedge w_2^d(A) \wedge ... \wedge w_n^d(A), A \subset \Omega$$

wobei $w_f^c$ und $w_f^d$ auf allen Teilmengen A von $\Omega$ definiert sind und wobei der Operator A das Minimum zwischen zwei Werten ist,
- Berechnen (204) einer Wahrscheinlichkeitsverteilung $P_f$ anhand der Funktionen $w_f^c$ und $w_f^d$,
Berechnen (204) einer Wahrscheinlichkeitsverteilung mit den folgenden Schritten:
- Berechnen (208) von Gemeinsamkeitsfunktionen $q_f^c$ und $q_f^d$ anhand der Funktionen $w_f^c$ und $w_f^d$,
- Berechnen (209) von Plausibilitätsfunktionen $pl_f^c$ und $pl_f^d$ anhand der Gemeinsamkeitsfunktionen $q_f^c$ und $qf^d$ unter Verwendung der folgenden Gleichungen:

$$pl_f^c(A) = \sum_{\emptyset \neq B \subseteq A} (-1)^{|B|+1} q_f^c(B), \quad A \in 2^\Omega, pl_f^c(\emptyset) = 0$$

$$pl_f^d(A) = \sum_{\emptyset \neq B \subseteq A} (-1)^{|B|+1} q_f^d(B), \quad A \in 2^\Omega, pl_f^d(\emptyset) = 0$$

- Berechnen (210) der Wahrscheinlichkeitsverteilungen $P_f^c$ und $P_f^d$ anhand der Plausibilitätsfunktionen $pl_f^c$ und $pl_f^d$ unter Verwendung der folgenden Gleichungen:

$$P_f^c(\{\omega_k\}) = \kappa^{-1} pl_f^c(\{\omega_k\}), \forall \omega_k \in \Omega \text{ mit } \kappa = \sum_{\omega_k \in \Omega} pl_f^c(\{\omega_k\})$$

$$P_f^d(\{\omega_k\}) = \kappa^{-1} pl_f^d(\{\omega_k\}), \forall \omega_k \in \Omega \text{ mit } \kappa = \sum_{\omega_k \in \Omega} pl_f^d(\{\omega_k\})$$

- Berechnen (211) einer zusammengefügten Wahrscheinlichkeitsverteilung $P_f$, die der zusammengefügten latenten Glaubensstruktur entspricht, berechnet anhand der Wahrscheinlichkeitsverteilungen $P_f^c$ und $P_f^d$ unter Verwendung der folgenden Gleichung:

$$P_f(\{\omega_k\}) = \kappa^{-1} P_f^c(\{\omega_k\}) / P_f^d(\{\omega_k\}) \text{ mit } \kappa = \sum_{\omega_k \in \Omega} P_f^c(\{\omega_k\}) / P_f^d(\{\omega_k\}).$$

2. Verfahren nach Anspruch 1, **dadurch gekennzeichnet, dass** das Berechnen (208) der Gemeinsamkeitsfunktionen $q_f^c$ und $q_f^d$ mit den folgenden Gleichungen erfolgt:

$$q_f^c(B) = \prod_{B \subset A \subset \Omega} w_f^c(A)$$

$$q_f^d(B) = \prod_{B \subset A \subset \Omega} w_f^d(A)$$

3. Verfahren nach Anspruch 1 oder 2, **dadurch gekennzeichnet, dass** die Erfassung (201) der Glaubensfunktionen direkt ist, wobei die Sensoren $c_1$, $c_2$, ..., $c_n$ direkt eine Glaubensfunktion ergeben.

4. Verfahren nach Anspruch 1 oder 2, **dadurch gekennzeichnet, dass** die Erfassung (201) der Glaubensfunktionen indirekt ist, wobei die Glaubensfunktionen $m_1$, $m_2$, ..., $m_n$ anhand von Informationen von den Sensoren $c_1$, $c_2$, ..., $c_n$ berechnet werden.

5. Vorrichtung zum Zusammenfügen von Informationen (103), die Folgendes umfasst:

   - Mittel zum Erfassen (105) von Glaubensfunktionen $m_1$, $m_2$, ..., $m_n$ anhand von Informationen von Sensoren (102, 102),
   - Mittel zum Zusammenfügen (106) der Glaubensfunktionen von den Erfassungsmitteln (105),
   **dadurch gekennzeichnet, dass** die Mittel zum Zusammenfügen von Informationen (103) das Verfahren nach einem der Ansprüche 1 bis 4 ausführen.

6. System zum Zusammenfügen von Informationen, das Folgendes umfasst:

   - mindestens zwei Sensoren (101, 102), die Daten sammeln und Informationen liefern,
   - Mittel zum Zusammenfügen von Informationen (103) von den Sensoren (101, 102), wobei die Zusammenfügungsmittel mit den Sensoren verbunden sind,
   **dadurch gekennzeichnet, dass** die Sensoren nicht unabhängig sind, und dadurch, dass die Mittel zum Zusammenfügen von Informationen (103) die Vorrichtung zum Zusammenfügen von Informationen nach Anspruch 5 umfassen.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Conjunctive and disjunctive combination of belief functions induced by nondistinct bodies of evidence. **DENOEUX.** Artifical Intelligence. Elsevier Science Publisher, vol. 172, 234-264

- **COBB.** On the plausibility transformation method for translating belief functions model to probability models. *Symbolic and quantitative approaches to reasonning with uncertainty lecture notes in computer science ; lecture notes in Artificial Intelligence,* 2004, vol. 2711, 255-266